# EUROPEAN PATENT SPECIFICATION

(11) **EP 4 202 250 B1**
(45) Date of publication and mention of the grant of the patent: **17.04.2024**
(21) Application number: 22210080.2
(22) Date of filing: 29.11.2022
(51) Int. Cl.: F16D 65/12

(54) **WHEEL BRAKE DISC FOR RAIL VEHICLES WITH IMPROVED MOUNTING**
RADBREMSSCHEIBE FÜR SCHIENENFAHRZEUGE MIT VERBESSERTER BEFESTIGUNG
DISQUE DE FREIN DE ROUE POUR UN VÉHICULE FERROVIAIRE AVEC UN MONTAGE AMÉLIORÉ

(30) Priority: 23.12.2021 SI 202100236
(43) Date of publication of application: 28.06.2023
(73) Proprietor: Kovis, d.o.o., 8250 Brezice (SI)
(72) Inventor: GRIVC, Uros, 8290 Sevnica (SI)
(74) Representative: Jersan, Tatjana

(56) References cited:
- EP-A2- 2 733 377
- US-B2- 7 625 030

## Description

The subject of the invention is a wheel brake disc for rail vehicles with improved wheel mounting and improved cooling.

The wheel discs of rail vehicles are mounted on the wheel in several ways. Typically, one half of the wheel brake disc is screwed to the wheel on each side, so that upon braking heat is introduced on each side of the wheel into the brake disc at the point where the brake disc contacts the brake lining. Braking and the consequent heat input to the brake disc from each side creates a temperature condition in the brake disc which is very uneven over the volume of the brake disc. The large temperature gradient resulting from braking causes uneven thermal expansion of the brake disc. The braking surface, where the heat input takes place, is much hotter than the inside of the brake disc or the point where the brake disc is attached to the wheel. In addition, the braking torque - the force resulting from vibrations when driving or moving over railway switches - and the lateral forces resulting from lateral acceleration in turns must be transmitted from the brake disc to the wheel. The linking elements, i.e. the bolts with which one half of the wheel brake disc is fastened to the wheel on each side, are particularly stressed. In addition, the brake discs, which are designed for high-speed trains reaching 350 km/h, are subjected to high centripetal accelerations resulting from the rapid rotation of the wheelsets in the order of 210 rad/s. Due to the high tangential velocity, the cohesion of the brake disc is important so it can structurally resist the radial forces.

The prior art describes methods of mounting a brake disc on a wheel, most of which are executed rigidly, wherein during operation the rigid mounting has led to high dynamic stresses on the bolts, which have failed due to dynamic fatigue.

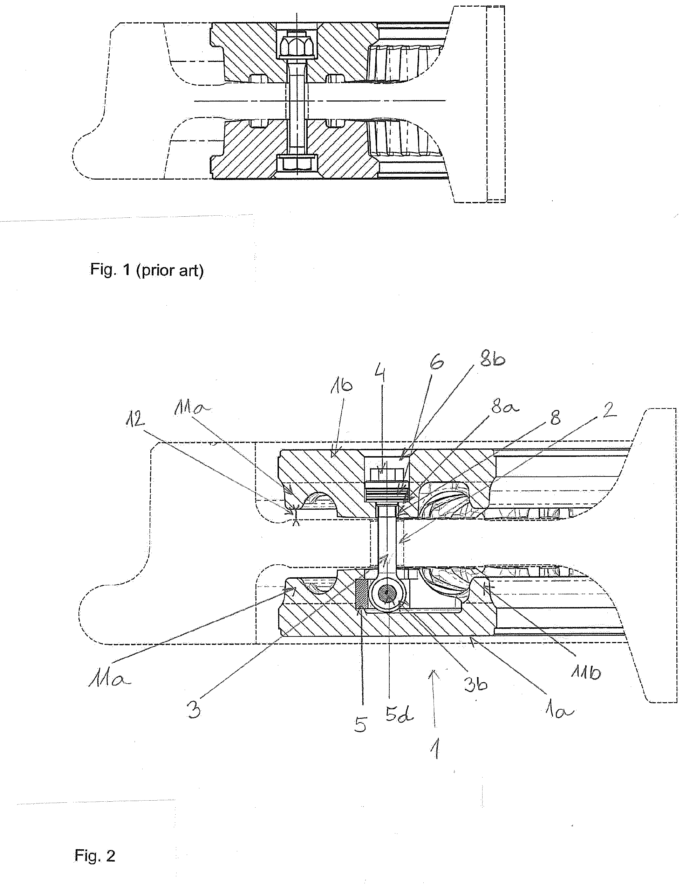

Current variants are mostly based on tightening the brake discs directly to the wheel with twelve bolts. The bolts in high-speed brake discs are made of special stainless steels, as they are intended to operate under extreme conditions in terms of temperature and stress. These bolts are also extremely expensive. Figure 1 shows the most common variant of mounting a wheel brake disc on a wheel.

Patent document No. US10047811 discloses a wheel brake disc with a modified seat between the wheel and the brake disc, which is intended to reduce stress on the bolts. The solution presented is essentially very similar to the existing prior art fixed mounting.

Patent document No. CN111594559A discloses a split type wheel-mounted brake disc for high-speed trains, which includes twelve bolt holes and a similar rather fixed mounting.

Patent document No: US8967341 discloses a variant in which the brake disc has a deformable part which is fixed to the wheel but which allows movements during thermal deformation of the disc.

Document US 7 625 030 B2 discloses another example of fixing the brake discs to the wheel of a rail vehicle.

The present invention solves the problem of additional dynamic stresses on the linking elements caused by thermal deformation. The mounting of the invention allows the wheel brake disc to move relatively freely during braking or heating, thereby extending the life of the brake disc and brake linings.

The shape of the cooling ribs ensures increased brake disc stiffness and low air resistance, and together with the outer and inner edges of the brake disc, air recirculation is improved in the area where the linking bolts are attached.

The invention will be described in more detail in the following and presented in the drawings, in which:
Figure 1 illustrates the prior art, namely the most common variant of mounting a wheel brake disc on a wheel;
Figure 2 illustrates mounting a wheel brake disc on a wheel of the invention;
Figure 3 shows one of the brake disc halves of the invention on the side facing the wheel
Figure 4 shows a detail from Figure 3
Figure 5 shows a linking bolt of the invention in cross-section
Figure 6 shows disc deformation during heating
Figure 7 shows temperature gradient in the disc during heating
Figure 8 shows ventilation losses as a function of speed.

A wheel brake disc 1 shown in Figure 2 comprises two ring-shaped halves 1a, 1b, each attached to the wheel ("wheel web") on its side by means of linking elements 2 which are equally spaced apart from each other, wherein the linking element 2 passes through a through hole 8 formed in the wheel.

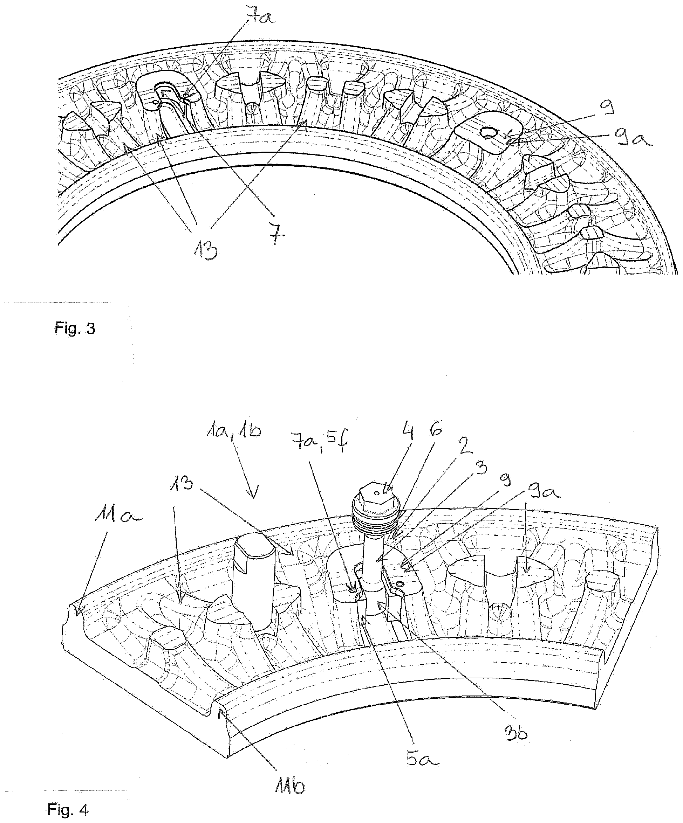

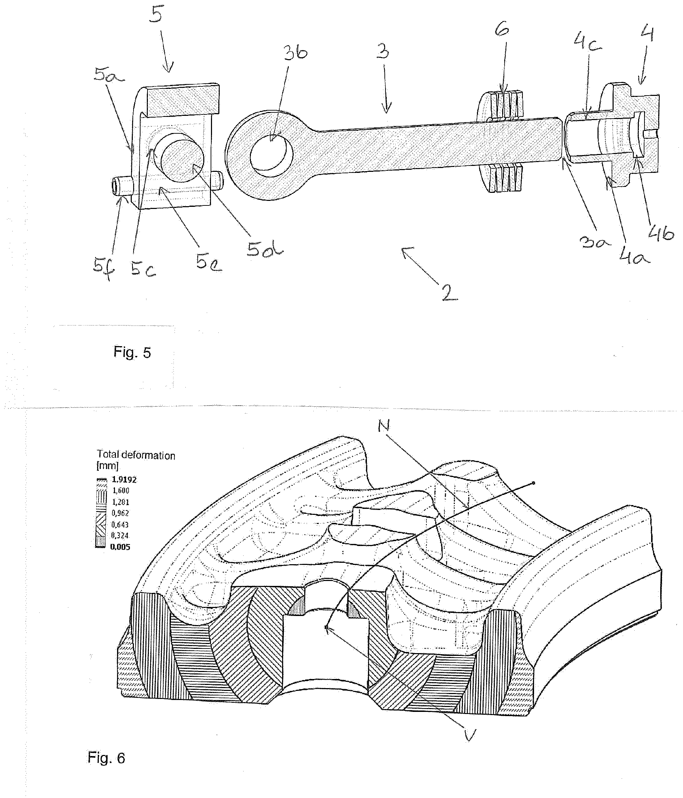

The linking element 2, shown in more detail in Figures 4 and 5, comprises an eyebolt 3, a nut 4, a sliding key 5 and a disc spring 6. The nut 4 is screwed onto the eyebolt 3 in such a way that the distance between an eye 3b of the bolt 3 and a flat side 4a of the nut 4 is toleranced, i.e. the length of the linking element 2 can be controlled. To this purpose, the nut 4 is formed with a closed end 4b which, when the nut 4 is tightened on the bolt 3, fits a face 3a of the bolt 3. The securing of the nut 4, i.e. to keep the nut 4 fixed and thus to ensure the required length of the linking element 2, is achieved by means of a tapered thread 4c.

The sliding key 5 is U-shaped in cross-section in a plane perpendicular to a wheel axle and is formed of two legs 5a, each of the legs 5a having a first through hole 5c substantially in the centre of the body 5b for receiving a pin 5d, each of the legs 5a being provided in their bottom section with a second through hole 5e for receiving a spring pin 5f for fixing the sliding key 5 in a pocket 7 provided for this purpose at corresponding positions on each of the halves 1a, 1b of the brake disc 1, the pocket 7 having holes 7a for receiving the spring pins 5f.

The eyebolt 3 is inserted into the sliding key 5 between the two legs 5a so that the eye 3b of the bolt 3 is in line with the first through holes 5c, then a pin 5d is pushed through the first through holes 5c and the eye 3b of the bolt 3, thereby securing the eyebolt 3 to the sliding key 5, so as to allow rotation of each of the halves 1a, 1b of the brake disc 1 relative to the eyebolt 3.

The sliding key 5 is then inserted into the designated pocket 7 provided at corresponding positions on each of the halves 1a, 1b of the brake disc 1 so that each of the holes 7a is in line with the corresponding second through hole 5e, and then the spring pins 5f are inserted through the holes 7a and the corresponding second through holes 5e, thereby securing the sliding key 5 in the pocket 7. In this way, the fixing of the sliding key 5 in the pocket 7 is secured by two spring pins 5f. Since the sliding key 5 is fixed in the pocket 7, the number of bores 8b on the braking surface for the insertion of the nut 4 and the disc springs 6 of the linking elements 2 is reduced by half.

In fact, the bores 8b on each of the halves 1a, 1b of the brake disc 1 are only necessary for the insertion of the nut 4 and the disc springs 6 for screwing the nut 4 to the eyebolt 3 from one side, while on the corresponding other side of each of the halves 1a, 1b of the brake disc 1, the eyebolt 3 is fixed by means of the sliding key 5 which is inserted in the pocket 7.

The prestress force of the linking element 2 is provided for by the disc springs 6 which are inserted between the flat side 4a of the nut 4 and a seat 8a formed in the bore 8b. The disc springs 6 ensure that the prestressing in the linking elements 2 is extremely low compared to a bolt if it were stressed directly without controlling the length of the linking elements 2. At the same time, they allow the rotation of the linking element 2 without any additional stress on the linking elements 2, which is a critical element in wheel discs precisely because of thermal deformation. In addition, the disc springs 6 allow a slight movement of each of the halves 1a, 1b of the brake disc 1 without a significant increase in the tension in the linking elements 2. Thus, under normal conditions, the tension in the linking elements 2 is only 26Mpa and the dynamic tension is only 18Mpa. If this were an ordinary bolt, it would be prestressed to about 800Mpa, wherein during thermal loading and deformation of the brake disc, failure due to material fatigue would occur in case of several repetitions.

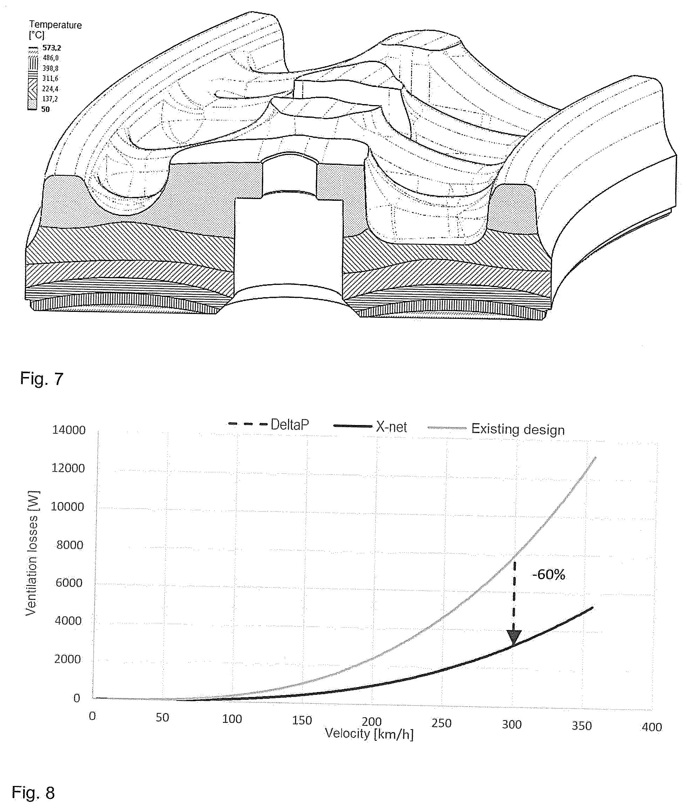

The use of said linking elements 2 allows a slight movement of each of the halves 1a, 1b of the brake disc 1, so that the individual sections of each of the halves 1a, 1b can be considered to move about the deformation zero line N, as can be clearly seen in Figure 6. The deformation zero line N is an imaginary circular curve passing through the axes of the pins 5d and through the volume centres of the disc springs 6, and on which lie respective local centres of pivots V of the individual sections of each of the halves 1a, 1b of the brake disc 1. Therefore, each of the halves 1a, 1b has its own deformation zero line N. Each of the linking elements 2 is positioned in the two corresponding local centres of the pivots V of each individual segment. One side of each of the halves 1a, 1b of the brake disc 1 is namely provided with an eyebolt 3 connected by the eye 3b to the pin 5d on the sliding key 5, and the axis of which passes through the corresponding centre of pivot V, and on the corresponding other side of each of the halves 1a, 1b of the brake disc 1 there are disc springs 6, the volume centre of which passes through the corresponding centre of pivot V. The deformation of the brake disc 1 is due to the temperature gradient shown in Figure 7. This is the origin of the main stresses in the interior of the brake disc 1, i.e. in each of the halves 1a, 1b, which cause a slight outward movement of each of the halves 1a, 1b of the brake disc 1 about said deformation zero line N. The centre of the pivot V is displaced downwards along the linking elements 2 during braking or heat propagation.

In order that during the thermal deformation of the brake disc 1, i.e. during braking, the distance of each of the halves 1a, 1b of the brake disc 1 to the centre of mounting, i.e. to the axis of the pin 5d of the linking element 2, is always the same, contact surfaces 9, where the brake disc 1 contacts the wheel, are made in a rounded manner, when viewed in cross-section in a plane perpendicular to the axis of the wheel (Figure 3). In this way, the brake disc 1 is always in contact with the wheel only on top surfaces 9a at the top of the rounding. With the distance to the centre of mounting being always the same, the elongation/tension on the linking elements 2 is constant or much more stable during the thermal deformation of the brake disc 1, since the deformation of the brake disc 1 does not directly affect the elongation of the linking elements 2. Since the distance to the centre of mounting of the linking element 2 remains the same throughout braking, there is no additional load on the linking element 2 during braking, thus drastically reducing the dynamic loads on the linking elements 2 during braking.

As the brake disc 1 is always in contact with the wheel only on said top surfaces 9a it is desirable for the brake disk 1 to have increased stiffness. The increased stiffness makes the brake disc 1 deform less during braking. The increased stiffness is primarily achieved by an additional outer edge 11a formed on the outer side of the brake disc 1 and an additional inner edge 11b formed on the inner side of the brake disc 1. i.e., of each of the halves 1a, 1b facing the wheel. The edges 11a, 11b also allow a precise control of the air flow through the brake disc 1. It is these edges 11a, 11b that give the brake disc 1 such low air resistance. The outer edge 11a and the inner edge 11b are formed in a way that a gap 12 between the wheel and the brake disc 1, i.e., between the outer edge 11a and the inner edge 11b of each of the halves 1a, 1b facing the wheel, is at least 3.5 mm to ensure a certain clearance and to prevent the wheel and the brake disc 1 from becoming jammed during thermal deformation of the brake disc 1. The width of the gap 12 depends in part on the size of the brake disc 1, the thickness of the brake disc, the material of which the brake disc 1 is made and the need for the amount of air flow. The air flow can namely be used to control the air resistance of the brake disc 1 and the heat dissipation. By adjusting the width of the gap 12, it is possible to select the characteristics of the brake disc 1. Preferably, the gap 12 between the wheel and the brake disc 1, i.e., between the outer edge 11a and the inner edge 11b of each of the halves 1a, 1b facing the wheel, is seven mm.

The higher stiffness of the brake disc 1 according to the invention is also achieved by the shape of cooling ribs 13. In one of the embodiments, at least one pair of adjacent cooling ribs 13 is shaped to substantially form an X shape, meaning that the cooling ribs 13 do not extend in a radial direction with respect to the axis of rotation, but rather extend at an angle with respect to the radial direction. Said cooling rib 13 extends at one angle with respect to the radial direction from the outer edge 11a of the brake disc 1 to the associated contact surface 9 and continuously ascends, then the cooling rib 13 extends from said contact surface 9 to the inner edge 11b at a second angle with respect to the radial direction and continuously descends to the inner edge 11b of the brake disc 1. Said shape of the cooling ribs 13 also allows for a uniform heat transfer from the annular braking surface to the inside of the brake disc 1, so that the temperature deviation from the average on the braking surface is lower.

Since the brake disc 1 is intended for high-speed trains, it is desirable that the brake disc 1 has low air resistance, as the resistance increases exponentially with speed, as can be seen in Figure 8, where the indication X-net refers to the brake disc according the invention. Said shape of the cooling ribs 13 reduces the air resistance of the brake disc 1 by at least up to 60% over the entire range, i.e. at all rotational speeds or cruising speeds, compared to the round ribs commonly used in most brake discs.

Said shape of the cooling ribs 13 and the outer 11a and inner 11b edges of the brake disc 1 also allow recirculation of air in the pockets 7, which further improves heat dissipation, even though the brake disc 1 has an extremely low air resistance.

As the edges 11a, 11b of the brake disc 1 and the cooling ribs 13 due to their shape are relatively far away from the point where the heat input takes place, these points (edges 11a, 11b and cooling ribs 13) remain relatively cold (around 300 °C) even during the hardest braking. This ensures that the braking surfaces never enter the plastic region, thus maintaining the brake disc 1 in its original condition even after the brake disc 1 has cooled down. In fact, it is known that extremely high loads on the brake disks of high-speed trains result in partial plastic deformation at the location of the braking surface due to the high temperatures, as the material undergoes a large drop in yield stress at high temperatures in the range 500 to 700 °C, which can result in permanent deformation of the brake disc into a slight cone shape.

So, the invention solves the problem of additional dynamic stresses on the linking elements 2. The problem with the previous solutions was in that during operation the rigid mounting has led to high dynamic stresses on the bolts, which have failed due to dynamic fatigue. Additional stresses are due to thermal deformation. The invention allows rotation of each of the halves 1a, 1b of the brake disc 1 about the deformation zero line, so that the change in the prestress force of the linking elements 2 is extremely small. The prestress force is regulated differently than in the previous variants, as it is based on the eyebolt 3 of the final distance, and then the prestress force is determined by the disc springs 6. Thus, the prestress force is reduced by a factor of 16x compared to previous variants. The dynamic stress on the linking elements 2 is thus reduced by a factor of 35x. Since the braking disc 1, i.e., its two halves 1a, 1b, can move relatively freely, the stresses on the braking surface are two to three times lower. In the previous variants with fixed mounting, plastic deformation of the brake disc occurred as the temperature on the braking surface could be extremely high, up to 750 °C. At this temperature, the material properties drop sufficiently and the brake disc gets permanently deformed. Since the stresses in the brake disc 1 according to the invention are much lower, plastic deformation of the braking surface does not occur, the possibility of cracks in the braking surface is lower, and the lifetime of the brake disc 1 and the brake linings is thus prolonged.

Due to the reduced air resistance by at least 60% over the entire range, there are significant energy savings. Per 1 million kilometres travelled, savings are in the order of 3-6 [tonCO2/disc-electric], or 8-15 [tonCO2/disc-diesel]. In financial terms, this amounts to 1300-2500 [€/disc-electric], 2400-4700 [€/disc-diesel]. The lifetime of the brake disc 1 according to the invention is estimated at 2 million km.

The previous versions of the wheel brake discs have twelve fixing bolts and twelve bores with a diameter of 35 mm on the braking surface. The brake disc 1 according to the invention has a reduced number of bores 8b for the insertion of the nut 4 and the disc springs 6, preferably there are only three, and the size of the bores 8b is reduced to a diameter of 30 mm, thus increasing the braking surface by 7%. The increase in braking surface is reflected in lower temperatures during braking, as well as in a longer service life of the brake disc 1 and the brake linings. The reduction in the number of bores 8b has a particularly good impact on the brake linings as there are fewer mounting edges per contact, preferably four times fewer. Noise during braking is also reduced.

## Claims

1. A wheel brake disc (1) for rail vehicles with improved mounting, the wheel brake disc (1) comprising two ring-shaped halves (1a, 1b), each attached to the wheel on its side by means of linking elements (2) which are equally spaced apart from each other, wherein the linking element (2) passes through a through hole (8) formed in the wheel, **characterized in that**
the linking element (2) comprises an eyebolt (3), a nut (4), a sliding key (5) and disc springs (6), wherein a fastening of the linking element (2) on one side of each half (1a, 1b) of the brake disk (1) is achieved through the sliding key (5) that is fastened to a designated pocket (7) formed at corresponding positions on each half (1a, 1b) of the brake disc (1), and the fastening of the linking element (2) on the corresponding second side of each of the two halves (1a, 1b) of the brake disc (1) is achieved through the nut (4) and disc springs (6) inserted in a bore (8b) for the insertion of the nut (4) and the disc springs (6), thereby reducing the number of bores (8b) on the braking surface for the insertion of the nut (4) and the disc springs (6) by half.

2. The wheel brake disc (1) according to claim 1, **characterized in that** the sliding key (5) is U-shaped in cross-section in a plane perpendicular to a wheel axle and is formed of two legs (5a), each of the legs (5a) having a first through hole (5c) substantially in the centre of the body (5b) for receiving a pin (5d) for fastening the eyebolt (3) to the sliding key (5), each of the legs (5a) being provided in their bottom section with a second through hole (5e) for receiving a spring pin (5f) for fixing the sliding key (5) in the pocket (7) provided for this purpose at corresponding positions on each of the halves (1a, 1b) of the brake disc (1), the pocket (7) having holes (7a) for receiving the spring pins (5f).

3. The wheel brake disc (1) according to claims 1 and 2, **characterized in that** the nut (4) is formed with a closed end (4b) which, when the nut (4) is tightened on the eyebolt (3), fits a face (3a) of the eyebolt (3) and the securing of the nut (4) is achieved by means of a tapered thread (4c) for ensuring the required length of the linking element (2).

4. The wheel brake disc (1) according to preceding claims, **characterized in that** the disc springs (6) are inserted between a flat side (4a) of the nut (4) and a seat (8a) formed in the bore (8b) for the insertion of the nut (4) and the disc springs (6) for reducing the prestress force of the linking element (2).

5. The wheel brake disc (1) according to preceding claims, **characterized in that** each of the linking elements (2) is positioned in the two corresponding local centres of pivots (V) of each individual segment of each of the halves (1a, 1b) of the brake disc (1), wherein the local centres of pivots (V) lie on a deformation zero line (N) and wherein the deformation zero line (N) is an imaginary circular curve passing through axes of the pins (5d) and through volume centres of the disc springs (6) of each of the halves (1a, 1b) of the brake disc (1).

6. The wheel brake disc (1) according to preceding claims, **characterized in that** contact surfaces (9), where the brake disc (1) contacts the wheel, are made in a rounded manner, when viewed in cross-section in a plane perpendicular to an axis of the wheel, for ensuring a constant distance of each of the halves (1a, 1b) of the brake disc (1) to the centre of mounting, that is to the axis of the pin (5d) of the linking element (2).

7. The wheel brake disc (1) according to preceding claims, **characterized in that** each of the halves (1a, 1b) of the brake disc (1) facing the wheel is formed with an additional outer edge (11a) formed on the outer side of the brake disc (1) and an additional inner edge (11b) formed on the inner side of the brake disc (1), wherein the outer edge (11a) and the inner edge (11b) are formed in a way that a gap (12) between the wheel and the brake disc (1) is at least 3.5 mm for ensuring a clearance and for preventing the wheel and the brake disc (1) from becoming jammed during thermal deformation of the brake disc (1).

8. The wheel brake disc (1) according to preceding claims, **characterized by** additionally including cooling ribs (13), wherein at least one pair of the adjacent cooling ribs (13) is shaped to substantially form an X shape, so that the cooling ribs (13) extend at an angle with respect to a radial direction relative to an axis of rotation, said cooling rib (13) extending at one angle with respect to the radial direction from the outer edge (11a) of the brake disc (1) to the associated contact surface (9) and continuously ascends, then the cooling rib (13) extends from said contact surface (9) to the inner edge (11b) at a second angle with respect to the radial direction and continuously descends to the inner edge (11b) of the brake disc (1).

## Patentansprüche

1. Radbremsscheibe (1) für Schienenfahrzeuge mit verbesserter Befestigung, wobei die Radbremsscheibe (1) zwei ringförmige Hälften (1a, 1b) umfasst, die jeweils auf ihrer Seite mittels Verbindungselementen (2), die gleichmäßig voneinander beabstandet sind, am Rad befestigt sind, wobei das Verbindungselement (2) durch ein im Rad ausgebildetes Durchgangsloch (8) hindurchtritt, **dadurch gekennzeichnet, dass** das Verbindungselement (2) einen Augenbolzen (3), eine Mutter (4), eine Schiebepassfeder (5) und Tellerfedern (6) umfasst, wobei eine Befestigung des Verbindungselements (2) an einer Seite jeder Hälfte (1a, 1b) der Bremsscheibe (1) durch die Schiebepassfeder (5) erreicht wird, die an einer vorgesehenen Tasche (7) befestigt ist, die an entsprechenden Positionen auf jeder Hälfte (1a, 1b) der Bremsscheibe (1) ausgebildet ist, und die Befestigung des Verbindungselements (2) an der entsprechenden zweiten Seite jeder der beiden Hälften (1a, 1b) der Bremsscheibe (1) durch die Mutter (4) und die Tellerfedern (6), die in eine Bohrung (8b) zum Einführen der Mutter (4) und der Tellerfedern (6) eingesetzt werden, erreicht wird, wodurch die Anzahl der Bohrungen (8b) auf der Bremsfläche für das Einsetzen der Mutter (4) und der Tellerfedern (6) um die Hälfte verringert wird.

2. Radbremsscheibe (1) nach Anspruch 1, **dadurch gekennzeichnet, dass** die Schiebepassfeder (5) im Querschnitt in einer Ebene senkrecht zu einer Radachse U-förmig ausgebildet ist und aus zwei Schenkeln (5a) gebildet ist, wobei jeder der Schenkel (5a) ein erstes Durchgangsloch (5c) im Wesentlichen in der Mitte des Körpers (5b) zur Aufnahme eines Bolzens (5d) zur Befestigung des Augenbolzens (3) an der Schiebepassfeder (5) aufweist, wobei jeder der Schenkel (5a) in seinem unteren Abschnitt mit einem zweiten Durchgangsloch (5e) zur Aufnahme eines Federstifts (5f) zur Fixierung der Schiebepassfeder (5) in der dafür vorgesehenen Tasche (7) an den entsprechenden Positionen an jeder der Hälften (1a, 1b) der Bremsscheibe (1) versehen ist, wobei die Tasche (7) Löcher (7a) zur Aufnahme der Federstifte (5f) aufweist.

3. Radbremsscheibe (1) nach den Ansprüchen 1 und 2, **dadurch gekennzeichnet, dass** die Mutter (4) mit einem geschlossenen Ende (4b) ausgebildet ist, das beim Anziehen der Mutter (4) am Augenbolzen (3) an einer Stirnfläche (3a) des Augenbolzens (3) anliegt und die Sicherung der Mutter (4) mittels eines angeschrägten Gewindes (4c) zur Gewährleistung der erforderlichen Länge des Verbindungselements (2) erreicht wird.

4. Radbremsscheibe (1) nach einem der vorhergehenden Ansprüche, **dadurch gekennzeichnet, dass** die Tellerfedern (6) zwischen einer Flachseite (4a) der Mutter (4) und einem in der Bohrung (8b) ausgebildeten Sitz (8a) zum Einsetzen der Mutter (4) und der Tellerfedern (6) zur Reduzierung der Vorspannkraft des Verbindungselements (2) eingesetzt sind.

5. Radbremsscheibe (1) nach einem der vorhergehenden Ansprüche, **dadurch gekennzeichnet, dass** jedes der Verbindungselemente (2) in den beiden entsprechenden lokalen Drehpunkten (V) jedes einzelnen Segments jeder der Hälften (1a, 1b) der Bremsscheibe (1) positioniert ist, wobei die lokalen Drehpunkte (V) auf einer Verformungsnulllinie (N) liegen und wobei die Verformungsnulllinie (N) eine gedachte Kreiskurve ist, die durch Achsen der Bolzen (5d) und durch Volumenmittelpunkte der Tellerfedern (6) jeder der Hälften (1a, 1b) der Bremsscheibe (1) verläuft.

6. Radbremsscheibe (1) nach einem der vorhergehenden Ansprüche, **dadurch gekennzeichnet, dass** Kontaktflächen (9), an denen die Bremsscheibe (1) das Rad berührt, im Querschnitt in einer Ebene senkrecht gesehen zu einer Achse des Rades abgerundet ausgebildet sind, um einen konstanten Abstand jeder der Hälften (1a, 1b) der Bremsscheibe (1) zur Montagemitte, d. h. zur Achse des Bolzens (5d) des Verbindungselements (2), zu gewährleisten.

7. Radbremsscheibe (1) nach einem der vorhergehenden Ansprüche, **dadurch gekennzeichnet, dass** jede der dem Rad zugewandten Hälften (1a, 1b) der Bremsscheibe (1) mit einer an der Außenseite der Bremsscheibe (1) ausgebildeten zusätzlichen Außenkante (11a) und einer an der Innenseite der Bremsscheibe (1) ausgebildeten zusätzlichen Innenkante (11b) ausgebildet ist, wobei die Außenkante (11a) und die Innenkante (11b) derart ausgebildet sind, dass ein Spalt (12) zwischen dem Rad und der Bremsscheibe (1) zur Gewährleistung eines Spiels mindestens 3,5 mm beträgt und zum Verhindern eines Verklemmens des Rades und der Bremsscheibe (1) bei thermischer Verformung der Bremsscheibe (1) ausgebildet ist.

8. Radbremsscheibe (1) nach den vorhergehenden Ansprüchen, **dadurch gekennzeichnet, dass** sie zusätzlich Kühlrippen (13) aufweist, wobei mindestens ein Paar der benachbarten Kühlrippen (13) so geformt ist, dass sie im Wesentlichen eine X-Form bilden, so dass sich die Kühlrippen (13) unter einem Winkel in Bezug auf eine radiale Richtung relativ zu einer Drehachse erstrecken, wobei sich die Kühlrippe (13) in einem Winkel in Bezug auf die radiale Richtung von dem äußeren Rand (11a) der Bremsscheibe (1) zu der zugehörigen Kontaktfläche (9) erstreckt und kontinuierlich ansteigt, dann erstreckt sich die Kühlrippe (13) von der Kontaktfläche (9) zu der Innenkante (11b) in einem zweiten Winkel in Bezug auf die radiale Richtung und fällt kontinuierlich bis zum Innenrand (11b) der Bremsscheibe (1) ab.

## Revendications

1. Disque de frein de roue (1) pour véhicules ferroviaires à montage amélioré, le disque de frein de roue (1) comprenant deux moitiés de forme annulaire (1a, 1b), chacune fixée à la roue sur son côté au moyen d'éléments de liaison (2) qui sont espacés de manière équidistante les uns des autres, l'élément de liaison (2) passant à travers un trou traversant (8) formé dans la roue, **caractérisé en ce que**
l'élément de liaison (2) comprend un boulon à oeil (3), un écrou (4), une clavette coulissante (5) et des ressorts à disque (6), une fixation de l'élément de liaison (2) sur un côté de chaque moitié (1a, 1b) du disque de frein (1) étant réalisée à travers la clavette coulissante (5) qui est fixée à une poche prévue à cet effet (7) et formée à des positions correspondantes sur chaque moitié (1a, 1b) du disque de frein (1), et la fixation de l'élément de liaison (2) sur le deuxième côté correspondant de chacune des deux moitiés (1a, 1b) du disque de frein (1) étant réalisée à travers l'écrou (4) et des ressorts à disque (6) insérés dans un alésage (8b) pour l'insertion de l'écrou (4) et des ressorts à disque (6), ce qui permet de réduire le nombre d'alésages (8b) sur la surface de freinage pour l'insertion de l'écrou (4) et des ressorts à disque (6) pour une moitié.

2. Disque de frein de roue (1) selon la revendication 1, **caractérisé en ce que** la clavette coulissante (5) est en forme de U en coupe transversale dans un plan perpendiculaire à un essieu de roue et est constituée de deux jambes (5a), chacune des jambes (5a) ayant un premier trou traversant (5c) sensiblement au centre du corps (5b) pour recevoir une broche (5d) pour fixer le boulon à oeil (3) à la clavette coulissante (5), chacune des jambes (5a) étant pourvue dans sa section inférieure d'un deuxième trou traversant (5e) pour recevoir une broche à ressort (5f) pour fixer la clavette coulissante (5) dans la poche (7) prévue à cet effet à des positions correspondantes sur chacune des moitiés (1a, 1b) du disque de frein (1), la poche (7) ayant des trous (7a) pour recevoir les broches à ressort (5f).

3. Disque de frein de roue (1) selon les revendications 1 et 2, **caractérisé en ce que** l'écrou (4) est formé avec une extrémité fermée (4b) qui, lorsque l'écrou (4) est serré sur le boulon à oeil (3), s'adapte à une face (3a) du boulon à oeil (3) et la fixation de l'écrou (4) est réalisée au moyen d'un filetage conique (4c) pour assurer la longueur requise de l'élément de liaison (2).

4. Disque de frein de roue (1) selon les revendications précédentes, **caractérisé en ce que** les ressorts à disque (6) sont insérés entre un côté plat (4a) de l'écrou (4) et un siège (8a) formé dans l'alésage (8b) pour l'insertion de l'écrou (4) et des ressorts à disque (6) pour réduire la force de précontrainte de l'élément de liaison (2).

5. Disque de frein de roue (1) selon les revendications précédentes, **caractérisé en ce que** chacun des éléments de liaison (2) est positionné dans les deux centres locaux correspondants de pivots (V) de chaque segment individuel de chacune des moitiés (1a, 1b) du disque de frein (1), les centres locaux de pivots (V) se trouvant sur une ligne zéro de déformation (N) et la ligne zéro de déformation (N) étant une courbe circulaire imaginaire passant par des axes des broches (5d) et à travers des centres de volume des ressorts à disque (6) de chacune des moitiés (1a, 1b) du disque de frein (1).

6. Disque de frein de roue (1) selon les revendications précédentes, **caractérisé en ce que** des surfaces de contact (9), où le disque de frein (1) entre en contact avec la roue, sont réalisées de manière arrondie, lorsqu'elles sont vues en coupe transversale dans un plan perpendiculaire à un axe de la roue, pour assurer une distance constante de chacune des moitiés (1a, 1b) du disque de frein (1) au centre de montage, c'est-à-dire à l'axe de la broche (5d) de l'élément de liaison (2).

7. Disque de frein de roue (1) selon les revendications précédentes, **caractérisé en ce que** chacune des moitiés (1a, 1b) du disque de frein (1) faisant face à la roue comprend un bord externe supplémentaire (11a) formé sur le côté externe du disque de frein (1) et un bord interne supplémentaire (11b) formé sur le côté interne du disque de frein (1), le bord externe (11a) et le bord interne (11b) étant formés de telle sorte qu'un espace (12) entre la roue et le disque de frein (1) est d'au moins 3,5 mm pour assurer un jeu et pour empêcher la roue et le disque de frein (1) de se coincer pendant la déformation thermique du disque de frein (1).

8. Disque de frein de roue (1) selon les revendications précédentes, **caractérisé en ce qu'**il comprend en outre des nervures de refroidissement (13), au moins une paire des nervures de refroidissement adjacentes (13) étant réalisée pour former sensiblement une forme X, de telle sorte que les nervures de refroidissement (13) s'étendent selon un angle par rapport à une direction radiale par rapport à un axe de rotation, ladite nervure de refroidissement (13) s'étendant à un angle par rapport à la direction radiale à partir du bord externe (11a) du disque de frein (1) jusqu'à la surface de contact associée (9) et monte de manière continue, puis la nervure de refroidissement (13) s'étend de ladite surface de contact (9) au bord interne (11b) selon un deuxième angle par rapport à la direction radiale et descend de manière continue vers le bord interne (11b) du disque de frein (1).
